# EUROPÄISCHE PATENTSCHRIFT

(11) **EP 1 727 690 B1**
(45) Veröffentlichungstag und Bekanntmachung des Hinweises auf die Patenterteilung: **26.09.2012**
(21) Anmeldenummer: 05731523.6
(22) Anmeldetag: 01.03.2005
(51) Int. Cl.: B60G 7/00, B60G 9/00

(54) **VIERPUNKTLENKER**
FOUR-POINT SUSPENSION ARM
BRAS DE SUSPENSION

(30) Priorität: 23.03.2004 DE 102004014610
(43) Veröffentlichungstag der Anmeldung: 06.12.2006
(73) Patentinhaber: ZF FRIEDRICHSHAFEN Aktiengesellschaft, 88038 Friedrichshafen (DE)
(72) Erfinder: KUNZE, Ralf, 49152 Bad Essen (DE); RATERMANN, Wolfgang, 49584 Fürstenau (DE); BUHL, Reinhard, 49163 Bohmte (DE)
(86) Internationale Anmeldenummer: PCT/DE2005/000351
(87) Internationale Veröffentlichungsnummer: WO 2005/092645

(56) Entgegenhaltungen:
- DE-A1- 19 521 874
- US-A- 6 129 367

## Beschreibung

Die Erfindung betrifft einen Vierpunktlenker für die Aufhängung einer Starrachse, insbesondere für ein Nutzfahrzeug, gemäß dem Oberbegriff des Patentanspruchs 1.

Vierpunktlenker der eingangs genannten Art kommen seit einigen Jahren insbesondere bei Lastkraftwagen und anderen Nutzfahrzeugen zum Einsatz. Solche Vierpunktlenker vereinigen eine Anzahl von Funktionen und Aufgaben, für die zuvor eine Mehrzahl von Lenkern bzw. Bauelementen im Bereich der Achsführung notwendig war, in lediglich einem Bauteil.

Durch den Einsatz eines Vierpunktlenkers entfällt u.a. die Notwendigkeit zusätzlicher Querstabilisatoren zur Wankstabilisierung des Fahrzeugaufbaus, da der Vierpunktlenker, beispielsweise zusammen mit den vorhandenen Längslenkern, sowohl die Aufgabe der Achsführung in Quer- und Längsrichtung, als auch Aufgabe der Momentenabstützung und der Querstabilisierung übernimmt. Auch die zuvor notwendigen Dreipunktlenker können entfallen. Auf diese Weise wird in erheblichem Umfang sowohl konstruktiver Aufwand als auch Fahrzeuggewicht eingespart, was zu reduzierten Kosten in Herstellung, Betrieb und Wartung des Nutzfahrzeugs führt.

Da die Querstabilisierung durch den Vierpunktlenker, nicht wie beim Torsionsstab zumeist hinter der Fahrzeugachse erfolgt, sondern vielmehr mittels Krafteinleitung in den Fahrzeugrahmen zumeist im Bereich vor der Fahrzeugachse erfolgen kann, benötigt das Fahrzeug zudem ggf. auch keine verstärkte Schlusstraverse zur Aufnahme der Wankmomente. Dies führt zu zusätzlichen Kosteneinsparungen und Gewichtsreduzierungen.

Aufgrund der Summe dieser vorteilhaften Eigenschaften hat sich der Vierpunktlenker, der aus Gründen der Fertigungstechnik, aus Kosten- und Festigkeitsgründen sowie aus Gründen des geringen Bauteilgewichts heute zumeist die Kreuz- bzw. X-Bauform aufweist, insbesondere im Bereich der Schwerlast-Nutzfahrzeuge äußerst rasch durchgesetzt und verbreitet.

Dabei sind im Stand der Technik, beispielsweise aus der DE 195 21 874 oder aus der DE 102 06 809 sowohl geschmiedete, als auch in Blechbauweise erstellte, sowie auch als Gussteil ausgeführte Vierpunktlenker bekannt. Beim Schmiedeverfahren ergibt sich jedoch aus Fertigungsgründen zumeist ein im Wesentlichen massiver Rechteckquerschnitt für die Arme des Vierpunktlenkers, was zu einem hohen Bauteilgewicht und zu damit verbundenen hohen Herstellungskosten sowie erhöhtem Kraftstoffverbrauch und reduzierter Nutzlast des Nutzfahrzeugs führt.

Gebaute bzw. geschweißte Vierpunktlenker sind ebenfalls aufwändig und damit teuer in der Herstellung. Bekannte Vierpunktlenker hingegen, die als Gussteil ausgeführt sind, siehe zum Beispiel Figuren 7, 8 oder 11 in der genannten Druckschrift DE 195 21 874, sind unter verschiedenen Gesichtspunkten ebenfalls aufwändig bzw. wenig prozesssicher in der Herstellung. So ist es bei Vierpunktlenkern mit geschlossener Hohlgeometrie beispielsweise nur sehr eingeschränkt möglich, die hohlraumbildenden Gusskerne so zu stützen, dass die Gusskerne beim Gießen nicht aufschwimmen und auf diese Weise ungleichmäßig dicke Wandstärken am Gussteil verursachen, was dementsprechend ungünstige Festigkeitseigenschaften zur Folge hat. Aufgrund derselben Problematik können solche gegossenen Vierpunktlenker nicht mit den im Sinne des Leichtbaus erwünschten großen Querschnitten und dabei geringen Wandstärken hergestellt werden, was wiederum zu Gussteilen bzw. Vierpunktlenkern mit unnötig hoher Masse führt.

Andere Vierpunktlenker, beispielsweise der aus Fig. 11 der genannten Druckschrift DE 195 21874 entnehmbare, insbesondere durch Gießen herstellbare Vierpunktlenker, benötigen zur Herstellung eine Mehrzahl von Gusskernen, was wiederum die Herstellung verkompliziert und damit teuer macht. Zudem lässt sich der dort dargestellte Vierpunktlenker mangels vorhandener Hohlräume nicht optimal an die herrschende Belastungssituation anpassen, die sich zumeist durch eine Kombination aus Schub und Biegung auszeichnet, insbesondere jedoch mit hohen Torsionsbelastungen verbunden ist.

Mit diesem Hintergrund ist es Aufgabe der vorliegenden Erfindung, einen Vierpunktlenker zu schaffen, mit dem sich die genannten Nachteile des gattungsgemäßen Standes der Technik überwinden lassen. Der Vierpunktlenker soll dabei insbesondere einfach, mit ausgezeichneter Reproduzierbarkeit und gleichzeitig kostengünstig herstellbar sein. Es soll im Sinne des auch am Nutzfahrzeug wünschenswerten Leichtbaus ferner möglich werden, Vierpunktlenker gezielt mit hervorragenden mechanischen Eigenschaften bei gleichzeitig verringertem Gewicht prozesssicher sowie kostengünstig herzustellen.

Diese Aufgabe wird durch einen Vierpunktlenker mit den Merkmalen des Patentanspruchs 1 gelöst.

Bevorzugte Ausführungsformen sind Gegenstand der Unteransprüche.

Der zur Führung einer Starrachse insbesondere eines Nutzfahrzeugs vorgesehene Vierpunktlenker gemäß der vorliegenden Erfindung ist in an sich zunächst bekannter Weise als im Wesentlichen einstückiges Hohlgehäuse mit vier Lageraugen zur Anbindung an der Achse bzw. am Fahrzeugrahmen ausgebildet. Dabei ist das bezüglich seiner Umrissform dem durch die Lageraugen gebildeten Viereck bzw. Trapez einbeschriebene Hohlgehäuse zur Aufnahme beispielsweise von Achsverschränkungen zumindest geringfügig tordierbar.

Erfindungsgemäß zeichnet sich der Vierpunktlenker jedoch dadurch aus, dass das Hohlgehäuse im Wesentlichen in Form eines mehrseitig, beispielsweise zweiseitig offenen Rohrs vorliegt, das in Bezug auf die Einbausituation am Fahrzeug liegend angeordnet ist. Dabei besitzt das Hohlgehäuse bzw. das Rohr einen Querschnitt, der abgerundet rechteckförmig (auch als Stadionkurve bezeichnet) bis O-förmig oder parabelförmig ist.

Ein dergestalt ausgebildetes Hohlgehäuse eines Vierpunktlenkers ist zunächst einmal äußerst einfach bzw. prozesssicher herstellbar, und zwar weitgehend unabhängig vom verwendeten Herstellungsverfahren. Dies hängt bereits damit zusammen, dass die offene Rohrgestalt des Hohlgehäuses eine verhältnismäßig einfache Grundform darstellt, die unabhängig von einem konkreten Herstellungsverfahren lediglich verhältnismäßig einfache Werkzeuge erfordert, ferner lediglich einen geringen bzw. einfachen und nicht zerklüfteten Hinterschnitt sowie keinerlei geschlossene Hohlräume aufweist.

Besonders günstig ist der beidseitig offene, das erfindungsgemäß im Wesentlichen rohrförmige Gehäuse aufweisende Vierpunktlenker beispielsweise, jedoch keineswegs ausschließlich in Bezug auf die Herstellung durch ein Gussverfahren.

Dies liegt darin begründet, dass der zur Erzeugung des Hohlraums beim Gießen notwendige Kern aufgrund der beidseitig offenen Enden des rohrförmigen Hohlgehäuses hervorragend abgestützt werden kann, wodurch jegliches hydrostatische Aufschwimmen des Kerns mit großer Sicherheit vermieden werden kann.

Zudem ist es dabei sogar möglich, lediglich einen einzigen Gießkern zu verwenden, der sowohl den gesamten Innenraum des Hohlgehäuses des Vierpunktlenkers, als auch die vier Lageraugen des Vierpunktlenkers ausformt. Auf diese Weise lässt sich der Vierpunktlenker sowohl mit hoher Prozesssicherheit als auch äußerst kostengünstig herstellen, wobei jedoch gleichzeitig auch dünnwandige, großvolumige und damit steife und leichte Geometrien problemlos mit hoher Präzision darstellbar sind.

Die erfindungsgemäße Gestaltung des Vierpunktlenkers ist aufgrund der einfachen Geometrie jedoch auch bei anderen Herstellungsverfahren, beispielsweise bei aus Schmiede- oder Tiefziehteilen gebauten Vierpunktlenkern, äußerst vorteilhaft.

Die Erfindung wird zunächst einmal verwirklicht unabhängig davon, ob die Längsachse des das Hohlgehäuse bildenden Rohrs bei Anordnung des Vierpunktlenkers in einem Kraftfahrzeug entlang der Fahrzeuglängsachse oder entlang der Fahrzeugquerachse verläuft. So ist es beispielsweise denkbar, die Längsachse des das Hohlgehäuse bildenden Rohrs in Richtung der Fahrzeuglängsachse anzuordnen, wodurch je nach Querschnittsform und Querschnittsgröße besonders hohe axiale und/oder polare Flächenträgheitsmomente bzw. besonders hohe Widerstandsmomente insbesondere gegenüber Wanktorsion um die Fahrzeuglängsachse erreichbar sind.

Gemäß einer bevorzugten Ausführungsform der Erfindung verläuft jedoch die Längsachse des das Hohlgehäuse bildenden Rohrs quer zur Fahrzeuglängsachse, bzw. in Fahrzeugquerrichtung. Diese Ausführungsform ist insbesondere dann vorteilhaft, wenn bestimmte definierte Steifigkeiten bzw. Nachgiebigkeiten bezüglich Torsion gefordert sind, bzw. wenn ein bestimmtes definiertes Verformungsverhalten des Vierpunktlenkers bezüglich der Wankbewegungen des Fahrzeugaufbaus erforderlich ist.

Die genaue Formgebung des Hohlgehäuses ist für die Verwirklichung der Erfindung zunächst ebenfalls nicht von entscheidender Bedeutung, solange das Hohlgehäuse im Wesentlichen die beschriebene, einfach herstellbare Rohrform aufweist. Dabei ist die Erfindung selbstverständlich nicht auf Vierpunktlenker mit prismatisch rohrförmigem Hohlgehäuse beschränkt, sondern umfasst auch von der prismatischen Form abweichende Rohrformen, insbesondere Rohre mit über die Rohrlänge veränderlichem Durchmesser, veränderlicher Querschnittsform und veränderlicher Wandstärke.

In diesem Zusammenhang ist es gemäß bevorzugter Ausführungsformen der Erfindung vorgesehen, dass das Hohlgehäuse des Vierpunktlenkers in der fahrzeugbezogenen Draufsicht bezüglich der Fahrzeuglängsachse oder/und bezüglich der Fahrzeugquerachse tailliert ist.

Dies bedeutet mit anderen Worten, dass das Hohlgehäuse in der Draufsicht auf das Fahrzeug im Wesentlichen jede Form vom (nicht taillierten) Rechteck bzw. Trapez, über die einseitig oder doppelt trompetenartige Umrissform (lediglich bezüglich Fahrzeuglängsachse ODER bezüglich Fahrzeugquerachse tailliert) bis hin zur Kreuzform bzw. X-Form (bezüglich Fahrzeuglängsachse UND bezüglich Fahrzeugquerachse tailliert) annehmen kann, ohne dass vom erfindungsgemäßen Prinzip des beidseitig offenen, rohrförmigen Hohlgehäuses abgewichen wird.

Mit diesem Hintergrund ist es gemäß einer weiteren, besonders bevorzugten Ausführungsform der Erfindung vorgesehen, dass das Hohlgehäuse in der fahrzeugbezogenen Draufsicht eine im Wesentlichen einstückig kreuzförmige bzw. X-förmige Gestalt besitzt. Dabei zerfällt das Hohlgehäuse in der Draufsicht in einen erkennbaren zentralen Gehäusebereich und vier periphere, die Lageraugen tragende Lenkerarme, ohne dass hierdurch jedoch das Grundprinzip des im Wesentlichen lediglich durch ein Rohr gebildeten Hohlgehäuses verlassen wird.

Diese Form des Lenkergehäuses ist bereits dadurch vorteilhaft, dass sie im Wesentlichen der seit langem bewährten X-Form bei den massiven bzw. geschmiedeten Vierpunktlenkern entspricht. Jedoch verbessert die mit dieser Formgebung verbundene, in der Draufsicht starke vierseitige Taillierung des das Hohlgehäuse bildenden offenen Rohrs weiter die einfache bzw. prozesssichere Herstellbarkeit des Vierpunktlenkers, insbesondere, jedoch keineswegs ausschließlich, bei Vierpunktlenkern, die im Gussverfahren hergestellt werden.

Dies hängt damit zusammen, dass durch die starke Taillierung die aufgrund des Innenraums des Hohlgehäuses gebildeten Hinterschnitte einerseits erheblich verkleinert, und andererseits die verbleibenden Hinterschnitte außerdem stark konisch bzw. zulaufend ausgebildet sind. Dies ist insbesondere, nicht jedoch ausschließlich, bei der Herstellung des Vierpunktlenkers durch Gießen vorteilhaft, da auf diese Weise die frei tragende Länge des Gusskerns besonders klein gehalten werden kann, wodurch der Gusskern noch besser gegen Aufschwimmen abgestützt wird.

Gemäß weiterer bevorzugter Ausführungsformen der Erfindung sind die Lenkerarme als im Querschnitt profilierte Biegeträger gestaltet bzw. besitzen einen im Wesentlichen C-förmigen bzw. U-förmigen Querschnitt.

Die Ausführung der Lenkerarme als profilierte Biegeträger, insbesondere als Biegeträger mit C-förmigem bzw. U-förmigem Querschnitt, ist dahingehend vorteilhaft, als auf diese Weise ein Teil der im Betrieb des Vierpunktlenkers auftretenden, nicht unerheblichen Verformungen bereits von den Lenkerarmen abgefangen werden kann. Zudem lassen sich die Lenkerarme auf diese Weise, insbesondere im Vergleich zu den bekannten, als massive Schmiedeteile ausgeführten Vierpunktlenkern, gewichtssparend ausführen. Der C-förmige Querschnitt ist jedoch auch im Vergleich zu dem bereits bekannten Doppel-T-förmigen Querschnitt der Lenkerarme von gegossenen Vierpunktlenkern vorteilhaft, da ein C-förmiger Querschnitt wegen dessen lediglich einseitig vorhandener Ausnehmung die Herstellbarkeit des Vierpunktlenkers vereinfacht und damit Kosten einspart.

Letzteres gilt insbesondere dann, wie dies auch gemäß einer weiteren, besonders bevorzugten Ausführungsform der Erfindung vorgesehen ist, wenn das Hohlgehäuse ein Gussteil ist. Eine Ausführung als Blechformteil wäre ebenso denkbar.

Zu den bereits weiter oben beschriebenen allgemeinen Vorteilen bei der Herstellung des erfindungsgemäßen Vierpunktlenkers kommt beim Gießen bezüglich der Ausführung des Vierpunktlenkers beispielsweise in der X-Form hinzu, dass sämtliche Hohlräume bzw. Ausnehmungen des Vierpunktlenkers, insbesondere einschließlich der Ausnehmungen der C-förmigen Lenkerarme, sowie gegebenenfalls einschließlich der Ausnehmungen für die Lageraugen, mit lediglich einem einzigen Gusskern erzeugt werden können.

Dabei leuchtet dem Gießereifachmann ohne weiteres ein, dass ein Vierpunktlenker, zu dessen Herstellung trotz der konstruktiv anspruchsvollen Auflösung in einen zentralen, hohlen Gehäusebereich sowie in vier Lenkerarme mit profiliertem Querschnitt lediglich ein einziger, noch dazu hervorragend abstützbarer Gusskern benötigt wird, mit äußerst hoher Präzision und Prozesssicherheit gefertigt werden kann. Dies kommt wiederum der konstruktiven Freiheit zugute, was bedeutet, dass der Vierpunktlenker beispielsweise mit einem voluminösen Querschnitt bei gleichzeitig vergleichsweise geringen Wandstärken gefertigt werden kann, ohne dass unzulässige Toleranzen bzw. Schwierigkeiten bei der Reproduzierbarkeit der Wandstärken auftreten.

All dies kommt der Bauteilqualität, der Versagenssicherheit und insbesondere dem damit ermöglichten reduzierten Gewicht eines erfindungsgemäß gestalteten Vierpunktlenkers zugute.

Gemäß einer weiteren bevorzugten Ausführungsform der Erfindung besteht das Hohlgehäuse des Vierpunktlenkers aus bainitischem Gusseisen. Ein Vierpunktlenker mit der erfindungsgemäßen Gestalt, der zudem aus bainitischem Gusseisen besteht, lässt sich weiter bezüglich besonders geringen Gewichts, in Bezug auf die konstruktiv erforderlichen Steifigkeits- und Nachgiebigkeitseigenschaften sowie bezüglich einer hohen Versagenssicherheit optimieren.

Dies hängt damit zusammen, dass bainitisches Gusseisen, das aufgrund seiner überlegenen Festigkeits- und Plastizitätseigenschaften im Maschinen- und Fahrzeugbau unter anderem auch als Leichtbauwerkstoff eingesetzt wird, Materialwerte aufweist, die mit den entsprechenden Materialkennwerten hochwertiger Vergütungsstähle vergleichbar sind. Dies gilt insbesondere für wichtige konstruktive Materialkennwerte wie Zugfestigkeit, Streckgrenze und Bruchdehnung.

Bainitisches Gusseisen besitzt jedoch eine weitere wichtige Eigenschaft. Es entspricht zwar in den erwähnten Materialkennwerten wie beschrieben weitgehend den hochwertigen Konstruktionsstählen, weist jedoch einen um etwa ein Viertel geringeren Elastizitätsmodul als diese Stähle auf, was in Bezug auf den in Rede stehenden Vierpunktlenker nicht nur keinen Nachteil, sondern vielmehr einen entscheidenden Vorteil darstellt.

Denn der geringere Elastizitätsmodul hat zur Folge, dass ein Vierpunktlenker bei gleicher Steifigkeit gegenüber Stahl bei der Ausführung in bainitischem Gusseisen einen größervolumigen Querschnitt aufweisen kann, ohne dass - bei gleicher Verformung - höhere mechanische Spannungen im Vierpunktlenker auftreten würden.

Bei einem Vierpunktlenker ist dieser Zusammenhang nicht zuletzt deshalb von Bedeutung, da neben den im Betrieb vorherrschenden, zumeist dynamischen Biege - und Torsionsspannungen außerdem auch Extrembelastungen auftreten können, die in Form von extrem hohen Torsionsmomenten bzw. - zum Beispiel bei starken Achsverschränkungen auf unebenem Gelände - sogar in Form von bestimmten, erzwungenen Torsionswinkeln vorliegen können.

In demselben Zusammenhang ist es auch von Bedeutung, dass bei einem Vierpunktlenker aus (bainitischem) Gusseisen, der jedoch dieselbe Geometrie wie ein Vierpunktlenker aus Stahl aufweist, bei derselben Verformung wegen des geringeren Elastizitätsmoduls niedrigere mechanische Spannungen im Bauteil auftreten. Dies bedeutet, dass ein Vierpunktlenker aus bainitischem Gusseisen eine höhere Reserve der nominalen Betriebsspannungen bezüglich der auftretenden Maximalspannungen bzw. insbesondere bezüglich der auftretenden maximalen Verformungen, ermöglicht. Dies lässt sich konstruktiv wiederum in Form von verringerten Wandstärken und/oder größeren Querschnittsvolumina und damit erhöhter Steifigkeit und/oder verringertem Gewicht vorteilhaft ausnutzen.

Gemäß einer weiteren, besonders bevorzugten Ausführungsform der Erfindung sind die Lageraugen einstückig an das Hohlgehäuse angeformt. Dies ist insbesondere, jedoch keineswegs ausschließlich, bei einem erfindungsgemäß gestalteten Vierpunktlenker aus Gusseisen von besonderem Vorteil, da auf diese Weise ein besonders homogener und belastungsoptimierter Faser- bzw. Wandstärkenverlauf im Bauteil erzeugt werden kann.

Ferner lassen sich auf diese Weise weitere Gewichtsvorteile und damit Kosteneinsparungen sowohl am Rohteil als auch am Fertigteil realisieren. Nicht zuletzt ist bei einer solchen Ausführungsform, wie bereits weiter oben angedeutet, prinzipiell lediglich ein einziger Gusskern notwendig, der sowohl den Hohlraum im zentralen Gehäusebereich als auch die Ausnehmungen der beispielsweise C-förmig profilierten Lenkerarme sowie darüberhinaus die Ausnehmungen der später die Gelenke aufnehmenden Lageraugen ausbildet.

Nach einer weiteren, bevorzugten Ausführungsform der Erfindung weisen die Lageraugen des Vierpunktlenkers Elastomergelenke bzw. Molekulargelenke auf. Bei Molekulargelenken ist im Unterschied insbesondere zu Gleitlagerungen wie Kugelgelenken das Kugelstück innerhalb des Lagerauges in Gummi einvulkanisiert. Dies ist einerseits insofern vorteilhaft, als auf diese Weise bereits die sonst erforderliche Abdichtung des Gelenks gegen Wasser und Schmutz vollständig entfallen kann. Andererseits besitzen Molekulargelenke neben einer verbesserten Geräuschdämpfung auch eine potenziell höhere Lebensdauer gegenüber herkömmlichen Kugelgelenken. Zudem verhindert die radiale bzw. allseitige Elastizität von Molekulargelenken die gerade bei Achsaufhängungen bekannten kinematischen Überbestimmungen und die damit verbundene schädliche Überlastung von Gelenken, Lenkerarmen und anderen Fahrzeugbauteilen.

Molekulargelenke sind jedoch auch im Hinblick auf einen weiteren Gesichtspunkt besonders vorteilhaft. Wie dies auch gemäß einer weiteren, ebenfalls bevorzugten Ausführungsform der Erfindung vorgesehen ist, kann die radiale Steifigkeit von zwei oder vier der Elastomergelenke des Vierpunktlenkers bezüglich der Fahrzeug-Wankrichtung von der radialen Steifigkeit bezüglich der zur Wankrichtung senkrechten Richtung abweichen, insbesondere in Wankrichtung geringer sein als senkrecht zur Wankrichtung.

Dies bedeutet mit anderen Worten, dass der Vierpunktlenker samt Molekulargelenken in Bezug auf Wankbewegungen des Fahrzeugs eine höhere Elastizität zeigt als in Bezug auf Bewegungen der Achse gegenüber dem Fahrzeugaufbau in der Horizontalebene. Dies führt zu einer besonders stabilen und sicheren Achs- bzw. Radführung, ermöglicht jedoch gleichzeitig die notwendige, konstruktiv vorgesehene Nachgiebigkeit des Vierpunktlenkers gegenüber Wankbewegungen bzw. Achsverschränkungen im Betrieb des Fahrzeugs.

Werden die Elastomergelenke gegenüber Bewegungen in Fahrzeug-Wankrichtung nachgiebiger bzw. mit geringerer Steifigkeit ausgelegt, so zwingt auf diese Weise zudem der Vierpunktlenker den Elastomergelenken einen höheren Verformungsanteil an den Wankbewegungen bzw. Achsverschränkungen auf, was wiederum die im Vierpunktlenkergehäuse auftretenden Maximalspannungen bzw. maximalen Verformungen verringert. Der Vierpunktlenker kann sodann, beispielsweise durch Vergrößerung des Querschnittsvolumens bei Verringerung der Wandstärken, konstruktiv eine weiter erhöhte Steifigkeit erhalten, ohne dass bei gegebener Gesamtverformung unzulässig hohe Spannungen im Vierpunktlenker auftreten würden. Auf diese Weise wird zusätzliches Gewicht eingespart, wodurch wiederum Kosten sowohl in Herstellung als auch im Betrieb des Vierpunktlenkers reduziert werden können.

Im Folgenden wird die Erfindung anhand lediglich ein Ausführungsbeispiel darstellender Zeichnungen näher erläutert. Dabei zeigt:
- **Fig. 1**: in perspektivischer Darstellung eine Ausführungsform eines Vierpunktlenkers gemäß der vorliegenden Erfindung;
- **Fig. 2**: in teilweise geschnittener Darstellung den Vierpunktlenker gemäß Fig. 1 in der Draufsicht; und
- **Fig. 3**: den Vierpunktlenker gemäß **Fig. 1** und **2** in seitlicher Ansicht.

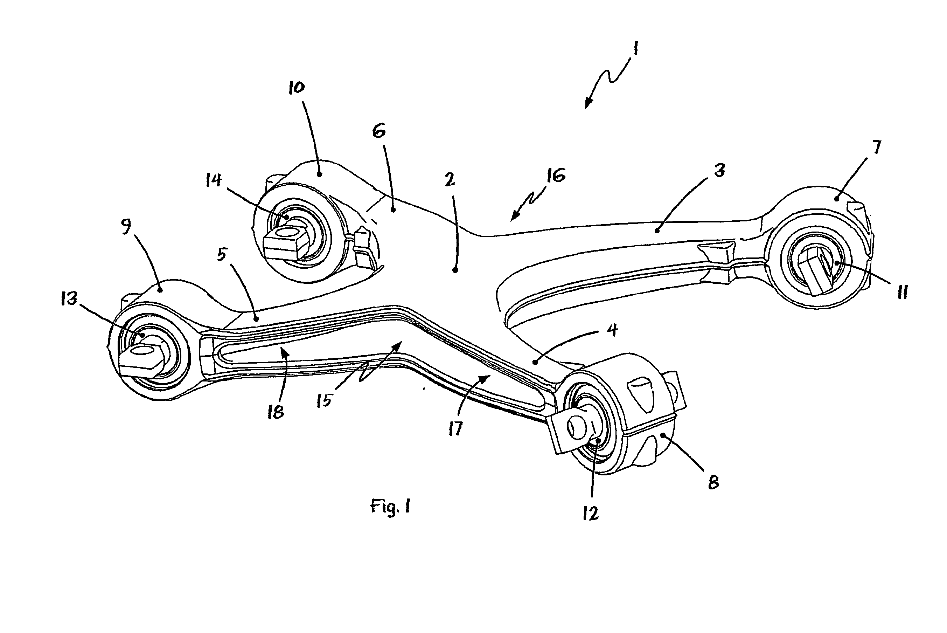

In **Fig.1** ist eine Ausführungsform eines erfindungsgemäßen Vierpunktlenkers 1 in isometrischer bzw. perspektivischer Ansicht dargestellt.

Man erkennt zunächst die im Wesentlichen kreuzförmige bzw. X-förmige Gestalt des Vierpunktlenkergehäuses mit einem zentralen, hohlen Gehäusebereich 2 und vier an den Gehäusebereich 2 einstückig angeformten Lenkerarmen 3, 4, 5, 6. Ferner erkennt man die jeweils an die äußeren Enden der Lenkerarme 3, 4, 5, 6 angeformten Lageraugen 7, 8, 9, 10, wobei in der Darstellung der Fig. 1 jedes der Lageraugen 7, 8, 9, 10 bereits mit dem jeweiligen Kugelgelenk bzw. Elastomergelenk 11, 12, 13, 14 versehen ist.

Aus der Darstellung der **Fig.1** geht auch bereits hervor, dass das Hohlgehäuse 2, 3, 4, 5, 6 des dargestellten Vierpunktlenkers 1 die erfindungsgemäße beidseitig offene rohrförmige Gestalt aufweist. Dabei ist das bei 15 und 16 trompetenartig aufgeweitete, prinzipiell jedoch nach wie vor rohrförmige Hohlgehäuse 2, 3, 4, 5, 6 an allen vier Seiten stark tailliert, wodurch sich die dargestellte, kreuzförmige bzw. X-förmige Gestalt des Vierpunktlenkers 1 mit den deutlich ausgebildeten Lenkerarmen 3, 4, 5, 6 ergibt.

Auf diese Weise wird bei dem dargestellten Vierpunktlenker 1 auch der äußerst homogene, fließende Übergang der einen C-förmigen Querschnitt aufweisenden Lenkerarme 3, 4, 5, 6 in den rohrförmigen zentralen Gehäusebereich 2 gebildet, der einer besonders gleichmäßigen Krafteinleitung und der Vermeidung jeglicher Belastungsspitzen im Material zugute kommt.

Insbesondere wird anhand der Darstellung der **Fig.1** auch die hervorragende Eignung des dargestellten Vierpunktlenkers 1 zur Herstellung durch ein Gussverfahren deutlich. Denn zur Herstellung des dargestellten Vierpunktlenkers 1 durch Gießen ist zum Zweck der Ausbildung des inneren Hohlraums 15, 16 sowie zur Ausbildung der Ausnehmungen 17, 18 der im Querschnitt C-förmige Lenkerarme 3, 4, 5, 6 lediglich ein einziger, gemeinsamer (nicht dargestellter) Gusskern notwendig.

Dieser Gusskern lässt sich zudem, wie der Fachmann der Gießereitechnik auch ohne explizite Darstellung des Gusskerns sofort erkennt, aufgrund der starken allseitigen Taillierung des Vierpunktlenkers 1 hervorragend in der Gussform abstützen, wodurch jegliches Aufschwimmen des Gusskerns und damit jegliche unvorhergesehene Veränderung der Wandstärken des Gussteils ausgeschlossen ist. Dies kommt der Prozesssicherheit beim Gießprozess, der kostengünstigen Herstellbarkeit sowie der hohen Bauteilpräzision und damit dem wünschenswerten Leichtbau am Vierpunktlenker 1 entgegen.

Zudem können gegebenenfalls auch noch die vier Lageraugen 7, 8, 9, 10 des Vierpunktlenkers, die in der Darstellung der **Fig.1** bereits mit den entsprechenden Elastomergelenken 11, 12, 13, 14 versehen sind, ebenfalls mit ein und demselben Gusskern erzeugt werden, mit dem auch der Hohlraum 15, 16 des zentralen Gehäusebereichs 2 sowie die Ausnehmungen 17, 18 der Lenkerarme 3, 4, 5, 6 erzeugt werden. Im Ergebnis führt dies dazu, dass der Vierpunktlenker 1 gemäß
**Fig. 1** unter einer nahezu idealen Kombination aus geringen Produktionskosten, hoher Prozesssicherheit und hoher Bauteilpräzision herstellbar ist.

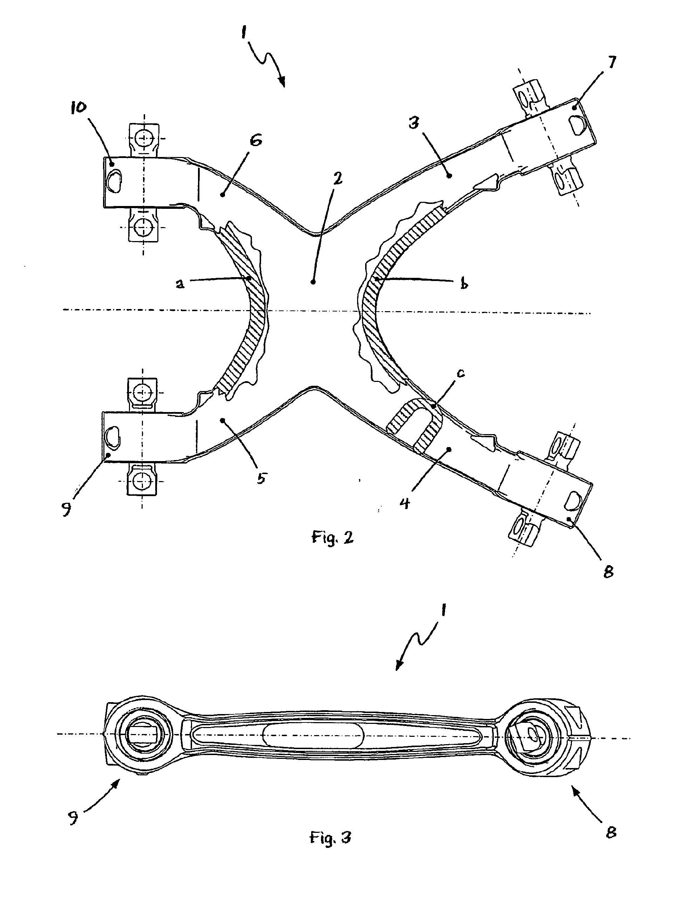

**Fig. 2** zeigt den Vierpunktlenker 1 gemäß **Fig.1** in der - bezogen auf die Einbausituation am Nutzfahrzeug betrachteten - Draufsicht. Dabei sind die Bereiche a, b des zentralen Gehäusebereichs 2 teilweise ausgebrochen bzw.
geschnitten dargestellt, um Gestalt und Aufbau des dargestellten Vierpunktlenkers **1** zu verdeutlichen. Zudem ist bei c der Querschnitt der Lenkerarme 3, 4, 5, 6 beispielhaft eingeblendet.

Man erkennt, dass ein Vierpunktlenker 1 gemäß dem in **Fig. 2** dargestellten sich durch eine insgesamt äußerst harmonisch fließende Formgebung auszeichnet, was entsprechend günstige gleichmäßige Kraftverläufe mit sich bringt. Dank der erfindungsgemäßen Formgebung kann der Vierpunktlenker 1 trotz gleichmäßiger Wanddickenverläufe a, b, c zudem in der denkbar günstigsten Weise belastungsoptimiert konstruiert werden. Dabei ist insbesondere auf den vollkommen fließenden Übergang der einen C-förmigen Querschnitt c aufweisenden Lenkerarme 3, 4, 5, 6 in den zentralen, rohrförmigen Gehäusebereich 2 hinzuweisen. All dies kommt sowohl einer hohen Bauteilqualität als auch einer hohen Belastbarkeit bei gleichzeitig geringem Gewicht des Vierpunktlenkers 1 zugute.

In der Draufsicht-Darstellung gemäß **Fig. 2** ist ferner für den Fachmann der Gießereitechnik wieder besonders gut erkennbar, dass der abgebildete Vierpunktlenker 1- neben der belastungsoptimierten Gestaltung - auch optimal an die bevorzugt vorgesehene Herstellung durch Gießen angepasst ist. Hierbei ist besonders die starke allseitige Taillierung zu erwähnen, die aufgrund der damit ermöglichten geringen freitragenden Länge des Gießkerns insbesondere eine optimale Abstützung des einstückigen Gießkerns erlaubt, was wiederum der Bauteilqualität und der genauen Reproduktion der vorgesehenen Wandstärken a, b, c förderlich ist.

**Fig. 3** zeigt den Vierpunktlenker 1 gemäß **Fig.1** und **2** nochmals in der seitlichen Ansicht. Auch hier ist die fließende Gestaltung des Vierpunktlenkers 1, die sich bis hin zu den Lageraugen 8, 9 fortsetzt, mit den damit ermöglichten gleichmäßigen

Wandstärken bei gleichzeitiger Belastungsoptimierung durch unterschiedlich große Hohlquerschnitte gut erkennbar. Diese Gestaltung kommt wiederum sowohl der problemlosen Herstellbarkeit des Vierpunktlenkers 1 durch Gießen, als auch dem möglichst geringen Gewicht des Vierpunktlenkers 1 zugute, insbesondere dann, wenn als Werkstoff zur Herstellung des Vierpunktlenkers 1 das weiter oben beschriebene bainitische Gusseisen verwendet wird.

Im Ergebnis wird somit deutlich, dass es dank der Erfindung möglich wird, Vierpunktlenker für die Achsführung insbesondere von Nutzfahrzeugen in denkbar idealer Weise belastungsoptimiert auszuführen. Dabei wird jedoch dank der besonderen Geometrie des erfindungsgemäßen Vierpunktlenkers gleichzeitig die Herstellung des Vierpunktlenkers insbesondere durch Gießen entscheidend vereinfacht und deren Prozesssicherheit entscheidend verbessert.

Auf diese Weise kann eine besonders kostengünstige Produktion des Vierpunktlenkers erfolgen, wobei der Vierpunktlenker dabei jedoch gleichzeitig eine erheblich verbesserte Bauteilqualität erhält. Aufgrund der mit der Erfindung ermöglichten belastungsoptimierten Gestaltung des Vierpunktlenkers lässt sich das Gewicht des Vierpunktlenkers bei unveränderten Steifigkeitswerten und bei unveränderter Versagenssicherheit erheblich verringern, was der Wirtschaftlichkeit insbesondere im Betrieb des Nutzfahrzeugs zugute kommt.

Die Erfindung leistet damit einen ganz wesentlichen Beitrag zur Verbesserung der Achsführung bzw. Achsaufhängung für Nutzfahrzeuge bei gleichzeitig reduzierbaren Herstellungskosten für die entsprechenden Vierpunktlenker. Dies kommt nicht zuletzt der Verringerung des Kraftstoffverbrauchs, der Verbesserung der Fahrsicherheit, der Kosteneffektivität in der Produktion sowie der verbesserten Systemtechnologie am Nutzfahrzeug zugute.

### Bezugszeichenliste

- 1: Vierpunktlenker
- 2: hohler Gehäusebereich
- 3: Lenkerarm
- 4: Lenkerarm
- 5: Lenkerarm
- 6: Lenkerarm
- 7: Lagerauge
- 8: Lagerauge
- 9: Lagerauge
- 10: Lagerauge
- 11: Elastomergelenk
- 12: Elastomergelenk
- 13: Elastomergelenk
- 14: Elastomergelenk
- 15: Hohlraum
- 16: Hohlraum
- 17: Ausnehmung
- 18: Ausnehmung
- a: Wandstärke
- b: Wandstärke
- c: Wandstärke

## Patentansprüche

1. Vierpunktlenker (1) für die Achsaufhängung einer Starrachse insbesondere eines Nutzfahrzeugs, der Vierpunktlenker (1) aufweisend vier Lageraugen (7, 8, 9, 10), von denen zwei Lageraugen (9, 10) mit der Achse und zwei Lageraugen (7, 8) mit dem Fahrzeugrahmen gelenkig verbindbar sind, wobei der Vierpunktlenker (1) als einstückiges, tordierbares, als ein durch die Lageraugen (7, 8, 9, 10) definiertes viereck- bzw. trapezförmiges Hohlgehäuse (2, 3, 4, 5, 6) ausgebildet ist,
**dadurch gekennzeichnet, dass** das Hohlgehäuse (2, 3, 4, 5, 6) im Wesentlichen durch ein fahrzeugbezogen liegend angeordnetes, mehrseitig offenes Rohr mit im Wesentlichen abgerundet rechteckigem bis O-förmigem Querschnitt gebildet ist.

2. Vierpunktlenker nach Anspruch 1,
**dadurch gekennzeichnet, dass** das Hohlgehäuse (2, 3, 4, 5, 6) als ein zweiseitig offenes Rohr ausgebildet ist.

3. Vierpunktlenker nach Anspruch 1 oder 2,
**dadurch gekennzeichnet, dass** die Längsachse des das Hohlgehäuse (2, 3, 4, 5, 6) bildenden Rohres quer zur Fahrzeuglängsachse verläuft.

4. Vierpunktlenker nach einem der vorstehend genannten Ansprüche,
**dadurch gekennzeichnet, dass** das Hohlgehäuse (2, 3, 4, 5, 6) in der fahrzeugbezogenen Draufsicht bezüglich der Fahrzeuglängsachse tailliert ist.

5. Vierpunktlenker nach einem der vorstehend genannten Ansprüche,
**dadurch gekennzeichnet, dass** das Hohlgehäuse (2, 3, 4, 5, 6) in der fahrzeugbezogenen Draufsicht bezüglich der Fahrzeugquerachse tailliert ist.

6. Vierpunktlenker nach einem der vorstehend genannten Ansprüche,
**dadurch gekennzeichnet, dass** das Hohlgehäuse (2, 3, 4, 5, 6) in der fahrzeugbezogenen Draufsicht eine im Wesentlichen einstückig kreuzförmige bzw. X-förmige Gestalt mit einem zentralen Gehäusebereich (2) und vier peripheren, die Lageraugen (7, 8, 9, 10) tragenden Lenkerarmen (3, 4, 5, 6) bildet.

7. Vierpunktlenker nach Anspruch 6,
**dadurch gekennzeichnet, dass** die Lenkerarme (3, 4, 5, 6) als im Querschnitt (c) profilierte Biegeträger gestaltet sind.

8. Vierpunktlenker nach Anspruch 6 oder 7,
**dadurch gekennzeichnet, dass** die Querschnittsform (c) der Lenkerarme (3, 4, 5, 6) im Wesentlichen C-förmig bzw. liegend U-förmig ist.

9. Vierpunktlenker nach einem der vorstehend genannten Ansprüche,
**dadurch gekennzeichnet, dass** das Hohlgehäuse (2, 3, 4, 5, 6) ein Gussteil oder ein Blechformteil ist.

10. Vierpunktlenker nach Anspruch 9,
**dadurch gekennzeichnet, dass** das Hohlgehäuse (2, 3, 4, 5, 6) aus bainitischem Gusseisen besteht.

11. Vierpunktlenker nach einem der vorstehend genannten Ansprüche,
**dadurch gekennzeichnet, dass** die Lageraugen (7, 8, 9, 10) einstückig an das Hohlgehäuse (2, 3, 4, 5, 6) angeformt sind.

12. Vierpunktlenker nach einem der vorstehend genannten Ansprüche,
**dadurch gekennzeichnet, dass** die Lageraugen (7, 8, 9, 10) des Vierpunktlenkers (1) Elastomergelenke bzw. Molekulargelenke (11, 12, 13, 14) aufweisen.

13. Vierpunktlenker nach einem der vorstehend genannten Ansprüche,
**dadurch gekennzeichnet, dass** die Radialsteifigkeit von zwei oder vier der Elastomergelenke (11, 12, 13, 14) in Fahrzeug-Wankrichtung geringer ist als in der zur Wankrichtung senkrechten Richtung.

## Claims

1. Four-point suspension arm (1) for the axial suspension of a rigid axle particularly of a commercial vehicle, the four-point suspension arm (1) having four bearing lugs (7, 8, 9, 10), of which two bearing lugs (9, 10) are connectable in an articulated manner to the axle an two bearing lugs (7, 8) are connectable in an articulated manner to the vehicle frame, the four-point suspension arm (1) being produced as a one-piece twistable square or trapezoidal hollow housing (2, 3, 4, 5, 6) defined by the bearing lugs (7, 8, 9, 10), **characterized in that** the hollow housing (2, 3, 4, 5, 6) is formed essentially by a tube which is arranged horizontally with respect to the vehicle and is open on a plurality of sides and which has an essentially rounded rectangular to 0-shaped cross section.

2. Four-point suspension arm according to Claim 1, **characterized in that** the hollow housing (2, 3, 4, 5, 6) is designed as a tube open on two sides.

3. Four-point suspension arm according to Claim 1 or 2, **characterized in that** the longitudinal axis of the tube forming the hollow housing (2, 3, 4, 5, 6) runs transversely with respect to the vehicle longitudinal axis.

4. Four-point suspension arm according to one of the abovementioned claims, **characterized in that** the hollow housing (2, 3, 4, 5, 6) is waisted with respect to the vehicle longitudinal axis, as in seen in a vehicle-related top view.

5. Four-point suspension arm according to one of the abovementioned claims, **characterized in that** the hollow housing (2, 3, 4, 5, 6) is waisted with respect to the vehicle transverse axis, as in seen in a vehicle-related top view.

6. Four-point suspension arm according to one of the abovementioned claims, **characterized in that** the hollow housing (2, 3, 4, 5, 6), as seen in a vehicle-related top view, forms a cross-shaped or X-shaped configuration essentially in one piece, with a central housing region (2) and with four peripheral suspension arm branches (3, 4, 5, 6) carrying the bearing lugs (7, 8, 9, 10).

7. Four-point suspension arm according to Claim 6, **characterized in that** the suspension arm branches (3, 4, 5, 6) are configured as flexural supports profiled in cross section (c).

8. Four-point suspension arm according to Claim 6 or 7, **characterized in that** the cross-sectional shape (c) of the suspension arm branches (3, 4, 5, 6) is essentially C-shaped or horizontally U-shaped.

9. Four-point suspension arm according to one of the abovementioned claims, **characterized in that** the hollow housing (2, 3, 4, 5, 6), is a casting or a sheet metal moulding.

10. Four-point suspension arm according to Claim 9, **characterized in that** the hollow housing (2, 3, 4, 5, 6) consists of austempered cast iron.

11. Four-point suspension arm according to one of the abovementioned claims, **characterized in that** the bearing lugs (7, 8, 9, 10) are formed in one piece onto the hollow housing (2, 3, 4, 5, 6).

12. Four-point suspension arm according to one of the abovementioned claims, **characterized in that** the bearing lugs (7, 8, 9, 10) of the four-point suspension arm (1) have elastomeric joints or molecular joints (11, 12, 13, 14).

13. Four-point suspension arm according to one of the abovementioned claims, **characterized in that** the radial rigidity of two or four of the elastomeric joints (11, 12, 13, 14) is lower in the vehicle rolling direction than in the direction perpendicular to the rolling direction.

## Revendications

1. Bras de suspension à quatre points (1) pour la suspension d'essieu d'un essieu rigide, notamment d'un véhicule utilitaire, le bras de suspension à quatre points (1) présentant quatre logements de palier (7, 8, 9, 10), dont deux logements de palier (9, 10) peuvent être reliés de manière articulée à l'essieu et deux logements de palier (7, 8) peuvent être reliés de manière articulée au châssis du véhicule, le bras de suspension à quatre points (1) étant réalisé sous forme de boîtier creux (2, 3, 4, 5, 6) d'une seule pièce, tordable, quadrilatéral ou trapézoïdal, défini par les logements de palier (7, 8, 9, 10),
**caractérisé en ce que** le boîtier creux (2, 3, 4, 5, 6) est formé essentiellement par un tube ouvert sur plusieurs côtés, disposé à plat par rapport au véhicule, avec une section transversale essentiellement arrondie rectangulaire à circulaire.

2. Bras de suspension à quatre points selon la revendication 1,
**caractérisé en ce que** le boîtier creux (2, 3, 4, 5, 6) est réalisé sous forme de tube ouvert sur deux côtés.

3. Bras de suspension à quatre points selon la revendication 1 ou 2,
**caractérisé en ce que** l'axe longitudinal du tube formant le boîtier creux (2, 3, 4, 5, 6) s'étend transversalement à parallèlement du véhicule.

4. Bras de suspension à quatre points selon l'une quelconque des revendications précédentes,
**caractérisé en ce que** le boîtier creux (2, 3, 4, 5, 6) est cintré dans la vue de dessus rapportée au véhicule par rapport à l'axe longitudinal du véhicule.

5. Bras de suspension à quatre points selon l'une quelconque des revendications précédentes,
**caractérisé en ce que** le boîtier creux (2, 3, 4, 5, 6) est cintré dans la vue de dessus rapportée au véhicule par rapport à l'axe transversal du véhicule.

6. Bras de suspension à quatre points selon l'une quelconque des revendications précédentes,
**caractérisé en ce que** le boîtier creux (2, 3, 4, 5, 6) forme, dans la vue de dessus rapportée au véhicule, une configuration essentiellement d'une seule pièce croisée ou cruciforme, avec une région de boîtier centrale (2) et quatre branches de bras de suspension (3, 4, 5, 6) périphériques portant les logements de palier (7, 8, 9, 10).

7. Bras de suspension à quatre points selon la revendication 6,
**caractérisé en ce que** les branches de bras de suspension (3, 4, 5, 6) sont configurées sous forme de supports flexibles profilés en section transversale (c).

8. Bras de suspension à quatre points selon les revendications 6 ou 7,
**caractérisé en ce que** la forme en section transversale (c) des branches de bras de suspension (3, 4, 5, 6) est essentiellement en forme de C ou en forme de U couché.

9. Bras de suspension à quatre points selon l'une quelconque des revendications précédentes,
**caractérisé en ce que** le boîtier creux (2, 3, 4, 5, 6) est une pièce coulée ou une pièce façonnée en tôle.

10. Bras de suspension à quatre points selon la revendication 9,
**caractérisé en ce que** le boîtier creux (2, 3, 4, 5, 6) se compose de fonte bainitique.

11. Bras de suspension à quatre points selon l'une quelconque des revendications précédentes,
**caractérisé en ce que** les logements de palier (7, 8, 9, 10) sont façonnés d'une seule pièce sur le boîtier creux (2, 3, 4, 5, 6).

12. Bras de suspension à quatre points selon l'une quelconque des revendications précédentes,
**caractérisé en ce que** les logements de palier (7, 8, 9, 10) du bras de suspension à quatre points (1) présentent des articulations moléculaires ou élastomères (11, 12, 13, 14).

13. Bras de suspension à quatre points selon l'une quelconque des revendications précédentes,
**caractérisé en ce que** la rigidité radiale de deux ou quatre des articulations élastomères (11, 12, 13, 14) est plus faible dans la direction de roulis du véhicule que dans la direction perpendiculaire à la direction de roulis.
